# EUROPEAN PATENT SPECIFICATION

(11) **EP 3 048 526 B1**
(45) Date of publication and mention of the grant of the patent: **19.06.2019**
(21) Application number: 16152473.1
(22) Date of filing: 22.01.2016
(51) Int. Cl.: G06F 3/16

(54) **VOICE PROMPTING METHOD AND APPARATUS**
STIMMAUFFORDERUNGSVERFAHREN UND VORRICHTUNG
PROCÉDÉ ET APPAREIL À COMMANDE VOCALE

(30) Priority: 26.01.2015 CN 201510038410
(43) Date of publication of application: 27.07.2016
(73) Proprietor: Xiaomi Inc., Beijing 100085 (CN)
(72) Inventor: WEN, Zhenwei, 100085 Haidian District (CN); XU, Ruijun, 100085 Haidian District (CN); WU, Jing, 100085 Haidian District (CN)
(74) Representative: Sadler, Peter Frederick

(56) References cited:
- EP-A1- 1 971 169
- US-A1- 2014 344 375

## Description

### TECHNICAL FIELD

The present disclosure relates to the field of computer technology, and more particularly, to a voice prompting method and a voice prompting apparatus, of the type which may be used with an electronic device.

### BACKGROUND

Because a voice prompting function is capable of directly voice-broadcasting relevant information, eliminating the need for a user to manually view his/her smart phone, the voice prompting function has become one of standard functions for a smart phone.

When using the voice prompting function to perform voice prompt on an unread communication message, the user firstly needs to enable the voice prompting function of a smart phone, and set a prompting manner. Upon receiving the unread communication message, the smart phone may perform voice prompt on detailed content of the received unread communication message in the set prompting manner. As such, the user may acquire the detailed content of the unread communication message from the voice prompt, even when it is inconvenient for the user to view the screen of the smart phone.

US 2014/0344375 A1 describes a system for providing notifications to a user. RSSI is used to determine distance of a user (i.e. the watch worn by the user) to a phone. This distance, in combination with other data from on-board sensors regarding user movements, is used by the software on the phone to decide whether or not to interrupt the user with notifications on the watch. EP 1971169 A1 describes a portable terminal apparatus that carries out a radio authentication together with a radio communicating unit. The portable terminal apparatus gives a predetermined alarm to a user, thereby improving a usability when a distance from the radio communicating unit is set to be an alarm distance D2 to be a shorter distance before the distance from the radio communicating unit is set to be an authentication enable distance D1.

### SUMMARY

In order to solve problems in the related art, the present disclosure provides a voice prompting method and a voice prompting apparatus, the technical solutions of which are as follows.

According to a first embodiment of the present disclosure, a voice prompting method is provided, which is applied in an electronic device, the method being in accordance with claim 1.

According to a second embodiment of the present disclosure, a voice prompting apparatus is provided, which is applied in an electronic device, the apparatus being in accordance with claim 4.

According to a third embodiment of the present disclosure, in accordance with claim 7, a voice prompting apparatus is provided, which is applied in an electronic device, the apparatus including:
a processor; and
a memory for storing instructions executable by the processor;
wherein the processor is configured to perform the method of claim 1, 2 or 3.

According to a fourth embodiment of the present disclosure, there is provided a computer program which, when being executed on a processor of an apparatus, performs the method of claim 1, 2 or 3, the computer program being in accordance with claim 8. Further embodiments are provided by the dependent claims 2-3 and 5-6.

The technical solutions provided in the embodiments of the present disclosure may achieve the following beneficial effects.

When an unread communication message is received, a signal intensity of a wearable device that is connected with the electronic device is acquired, and voice prompt is performed on the unread communication message according to a prompting manner corresponding to the signal intensity. Because when voice prompt is performed on the unread communication message, the prompting manner may be defined based on the signal intensity of the wearable device, and the signal intensity of the wearable device usually indicates a distance from the user to the electronic device, thus, when the user is located remote from the electronic device, the voice prompt may be performed in a safer voice prompting manner, thereby solving the problem in the related art that when voice prompt is performed on detailed content of an unread communication message in the same prompting manner, privacy is easily leaked for a user at a remote location, and achieving the effect of enhancing security of user information.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a diagram illustrating an implementing environment relating to voice prompting methods according to some exemplary embodiments;
FIG. 2 is a flowchart illustrating a voice prompting method according to an exemplary embodiment;
FIG. 3A is a flowchart illustrating a voice prompting method according to another exemplary embodiment;
FIG. 3B is a diagram illustrating a voice prompt according to an exemplary embodiment;
FIG. 3C is a diagram illustrating a voice prompt according to another exemplary embodiment;
FIG. 3D is a diagram illustrating a voice prompt according to still another exemplary embodiment;
FIG. 3E is a flowchart illustrating a method for interrupting voice prompt according to an exemplary embodiment;
FIG. 3F is a flowchart illustrating a method for re-performing voice prompt according to an exemplary aspect;
FIG. 4 is a block diagram illustrating a voice prompting apparatus according to an exemplary embodiment;
FIG. 5 is a block diagram illustrating a voice prompting apparatus according to another exemplary embodiment; and
FIG. 6 is a block diagram illustrating an apparatus adapted for voice prompting according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

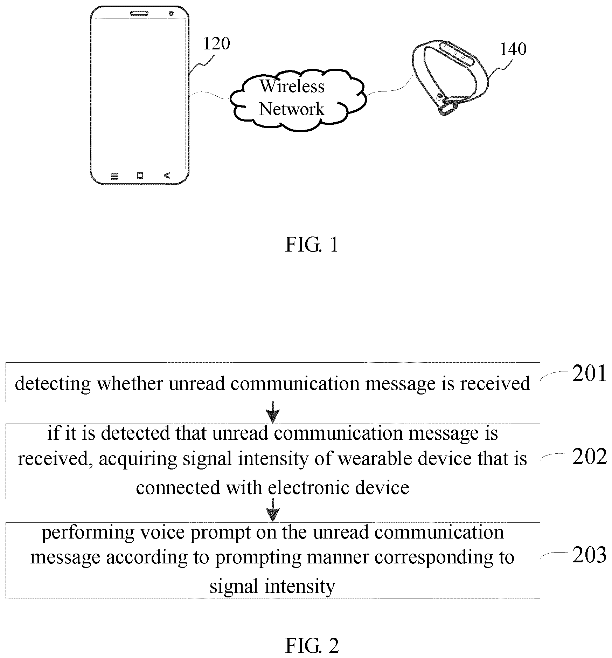

FIG. 1 is a diagram illustrating an implementing environment relating to voice prompting methods according to some exemplary embodiments. As shown in FIG. 1, the implementing environment may include an electronic device 120 and a wearable device 140.

The electronic device 120 may be an electronic device that has a voice prompting function. The electronic device may be a smart phone, a tablet computer, a smart television, an e-book reader, an multimedia player, a portable laptop computer, a desktop computer, and the like.

The electronic device 120 and the wearable device 140 may be connected to each other via a wireless network, which may be a low-power Bluetooth, Wi-Fi (Wireless-Fidelity), etc.

The wearable device 140 may be a wearable device capable of broadcasting signals. The wearable device 140 herein may be a smart bracelet, a smart watch, smart glasses, etc.

FIG. 2 is a flowchart illustrating a voice prompting method according to an exemplary embodiment. As shown in FIG. 2, the voice prompting method is applied in an electronic device 120 in the implementing environment as shown in FIG. 1, and includes the following steps.

In step 201, it is detected whether an unread communication message is received.

In step 202, if it is detected that an unread communication message is received, a signal intensity of a wearable device that is connected with the electronic device is acquired.

In step 203, voice prompt is performed on the unread communication message according to a prompting manner corresponding to the signal intensity.

To sum up, according to the voice prompting method provided by the embodiment of the present disclosure, when an unread communication message is received, a signal intensity of a wearable device that is connected with the electronic device is acquired, and voice prompt is performed on the unread communication message according to a prompting manner corresponding to the signal intensity. Because when voice prompt is performed on the unread communication message, the prompting manner may be defined based on the signal intensity of the wearable device, and the signal intensity of the wearable device usually indicates a distance from the user to the electronic device, thus, when the user is located remote from the electronic device, the voice prompt may be performed in a safer voice prompting manner, thereby solving the problem in the related art that when voice prompt is performed on detailed content of an unread communication message in the same prompting manner, privacy is easily leaked for a user at a remote location, and achieving the effect of enhancing security of user information.

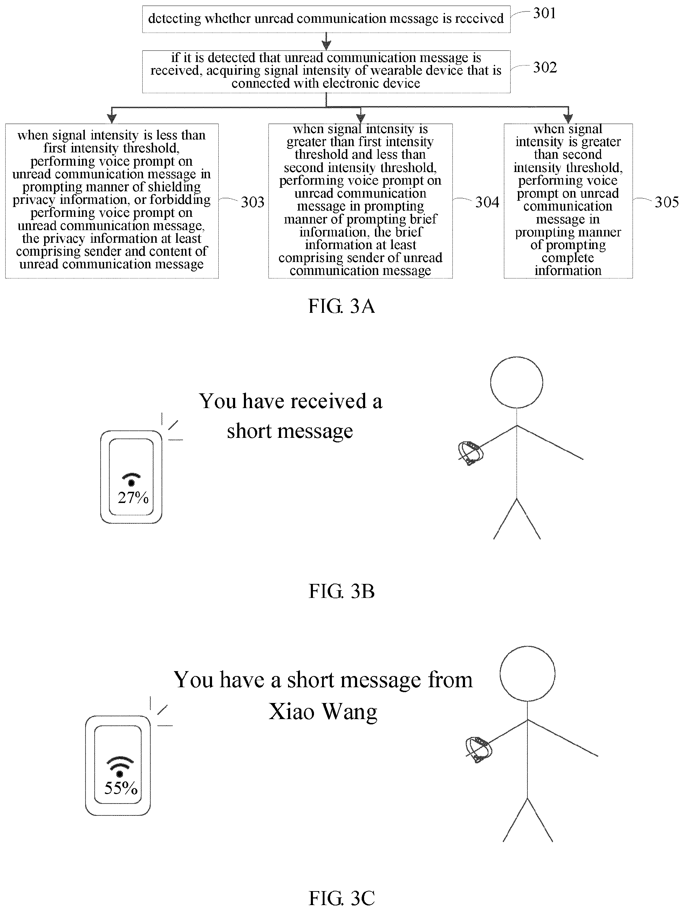

FIG. 3A is a flowchart illustrating a voice prompting method according to another exemplary embodiment. As shown in FIG. 3A, the voice prompting method is applied in an electronic device 120 in the implementing environment as shown in FIG. 1, and includes the following steps.

In step 301, it is detected whether an unread communication message is received.

The unread communication message herein may be a short message, a voice communication message, an instant communication message, MMS, a push message, a reminder message, a multimedia communication message, an email or the like that has not been read or viewed by the user.

In practical applications, the user may set a particular type of the unread communication message on which the voice prompt is to be performed. According to the user's setting, the electronic device may detect whether the particular type of the unread communication message is received. The particular type of the unread communication message may be one, two, more or all of a short message, a voice communication message, an instant communication message, MMS, a push message, a reminder message, a multimedia communication message, an email or the like.

For example, the user may only set the short message as the type of the unread communication message on which the voice prompt is to be performed, then the electronic device may only detect whether a short message is received; or, the user may set the short message and the voice communication message as the type of the unread communication message on which the voice prompt is to be performed, then the electronic device may detect whether a short message or a voice communication message is received; or, the user may set the short message and the instant communication message as the type of the unread communication message on which the voice prompt is to be performed, then the electronic device may detect whether a short message or an instant communication message is received; or, the user may set the short message, the voice communication message and the instant communication message as the type of the unread communication message on which the voice prompt is to be performed, then the electronic device may detect whether a short message, a voice communication message or an instant communication message is received.

In step 302, if it is detected that an unread communication message is received, a signal intensity of a wearable device that is connected with the electronic device is acquired.

Upon receiving an unread communication message, the electronic device may determine a signal intensity of a wearable device by a received signal broadcasted from the wearable device that is connected with the electronic device. The electronic device may determine the signal intensity of the wearable device in the following two manners.

In one manner, a signal broadcasted from the wearable device that is connected with the electronic device is acquired, a signal intensity of the signal is obtained, and the obtained signal intensity is determined as the signal intensity of the wearable device.

After acquiring the signal broadcasted from the wearable device that is connected with the electronic device, the electronic device directly determines the signal intensity of the signal as the signal intensity of the wearable device that is connected with the electronic device. As such, the electronic device may acquire the signal intensity of the wearable device with a better real-time performance.

In another manner, at least two signals broadcasted from the wearable device that is connected with the electronic device are acquired, an average value of signal intensities of the acquired at least two signals is calculated, and the obtained average value is determined as the signal intensity of the wearable device.

After acquiring a plurality of signals broadcasted from the wearable device that is connected with the electronic device, the electronic device calculates an average value of signal intensities of these signals, and determines the calculated average value as the signal intensity of the wearable device. As such, the electronic device may acquire the signal intensity of the wearable device with a better accuracy.

Optionally, the electronic device may acquire, within a short period of time, a plurality of signals broadcasted from the wearable device that is connected with the electronic device, e.g., acquiring a plurality of signals within 1 or 2 seconds, so as to prevent the problem of poor timeliness of voice prompt due to longer time period for acquiring signals.

For example, within 2 seconds after receiving an unread communication message, the electronic device acquires three signals broadcasted from the wearable device that is connected with the electronic device, obtains that the signal intensities corresponding to the three signals are respectively 55%, 62%, 57%, calculates an average value thereof is 58%, and determines 58% as the signal intensity of the wearable device. It should be noted that a percentage value is adopted herein to denote the signal intensity. In practical applications, RSSI (Received Signal Strength Indication) or the like may be adopted to denote the signal intensity, and the present embodiment sets no limitation to the denoting manner of the signal intensity.

Since the wearable device is usually worn on the user's body, the distance from the wearable device to the electronic device may be used to denote the distance from the user to the electronic device. The signal intensity of the wearable device, which is determined by the electronic device based on the received information of the wearable device, is usually in positive correlation to the distance from the wearable device to the electronic device, thus may be used to denote the distance from the user to the electronic device. In this case, the signal intensity of the wearable device may be used to determine a prompting manner in which voice prompt is performed on the unread communication message in the electronic device. In practical applications, after acquiring the signal intensity of the wearable device, the electronic device may perform voice prompt on the unread communication message according to a magnitude of the acquired signal intensity, referring to the following steps 303 to 305.

In step 303, when the signal intensity is less than a first intensity threshold, voice prompt is performed on the unread communication message in a prompting manner of shielding privacy information, or performing voice prompt on the unread communication message is forbidden, the privacy information at least including a sender and content of the unread communication message.

After acquiring the signal intensity of the wearable device, the electronic device judges whether the signal intensity is less than the first intensity threshold. When the signal intensity is less than the first intensity threshold, it means that the user is remote from the electronic device or there are a lot of obstacles between the user and the electronic device. In order to protect the user's privacy and prevent privacy leakage due to voice prompt on the unread communication message, the electronic device may perform voice prompt on the unread communication message in a prompting manner of shielding privacy information. For example, the content of the voice prompt doesn't include the sender and content of the unread communication message, but only includes that the unread communication message is received. Optionally, when the signal intensity is less than the first intensity threshold, in order to better protect the user's privacy and prevent privacy leakage due to voice prompt on the unread communication message, the electronic device may perform no voice prompt on the unread communication message.

For example, please refer to FIG. 3B, which is a diagram illustrating a voice prompt according to an exemplary embodiment. As shown in FIG. 3B, the first intensity threshold is 30%. After receiving a short message, the electronic device acquires that the signal intensity of the wearable device that is connected with the electronic device is 27%. The detected signal intensity of the wearable device is less than the first intensity threshold 30%, which indicates that the user is remote from the electronic device. In this case, the electronic device may perform voice prompt on the short message in a prompting manner of shielding privacy information: "You have received a short message". This voice prompt doesn't include a sender and content of the short message, but merely informs the user that there is a short message, not only performing a prompt on the unread communication message, but also protecting the user's communication privacy.

In step 304, when the signal intensity is greater than the first intensity threshold and less than a second intensity threshold, voice prompt is performed on the unread communication message in a prompting manner of prompting brief information, the brief information at least including the sender of the unread communication message.

After acquiring a signal intensity of the wearable device which is greater than the first intensity threshold, the electronic device judges whether the signal intensity is less than the second intensity threshold. When the signal intensity is greater than the first intensity threshold and less than the second intensity threshold, the electronic device may perform voice prompt on the unread communication message in a prompting manner of prompting brief information. For example, only the sender of the unread communication message is to be prompted. The sender may be telephone number, nickname, name, etc. of the sending person. For example, when the received unread communication message is a short message or a voice communication message, the electronic device may, based on the sending person's telephone number, search whether there is a name corresponding to the sending person's telephone number in the contact book of the electronic device. If there is, the searched name is determined as the sender of the unread communication message, and the voice prompt is performed based on the determined sender; if there isn't, the telephone number of the sending person is determined as the sender of the unread communication message, and the voice prompt is performed based on the determined sender. For another example, when the received unread communication message is an instant communication message, the electronic device may, based on the sending person's telephone number, search whether there is a name or nickname corresponding to the sending person's telephone number in the contact book of an instant communication program activated by the electronic device. If there is, the searched name or nickname is determined as the sender of the unread communication message, and the voice prompt is performed based on the determined sender; if there isn't, the telephone number of the sending person is determined as the sender of the unread communication message, and the voice prompt is performed based on the determined sender.

For example, please refer to FIG. 3C, which is a diagram illustrating a voice prompt according to another exemplary embodiment. As shown in FIG. 3C, the first intensity threshold is 30%, and the second intensity threshold is 60%. After receiving a short message, the electronic device acquires that the signal intensity of the wearable device that is connected with the electronic device is 55%. The detected signal intensity of the wearable device is greater than the first intensity threshold 30% and less than the second intensity threshold 60%. In this case, the electronic device may perform voice prompt on the unread communication message in a prompting manner of prompting brief information: "You have a short message from Xiao Wang". This voice prompt merely includes a sender and a type of the unread communication message, allowing the user to generally know about relevant information of the unread communication message, which is convenient for the user to determine, based on the obtained relevant information, whether to view the unread communication message immediately.

In step 305, when the signal intensity is greater than the second intensity threshold, voice prompt is performed on the unread communication message in a prompting manner of prompting complete information.

After acquiring a signal intensity of the wearable device which is greater than the second intensity threshold, the electronic device may perform voice prompt on the unread communication message in a prompting manner of prompting complete information. That is, the electronic device may voice-broadcast the sender and content of the unread communication message.

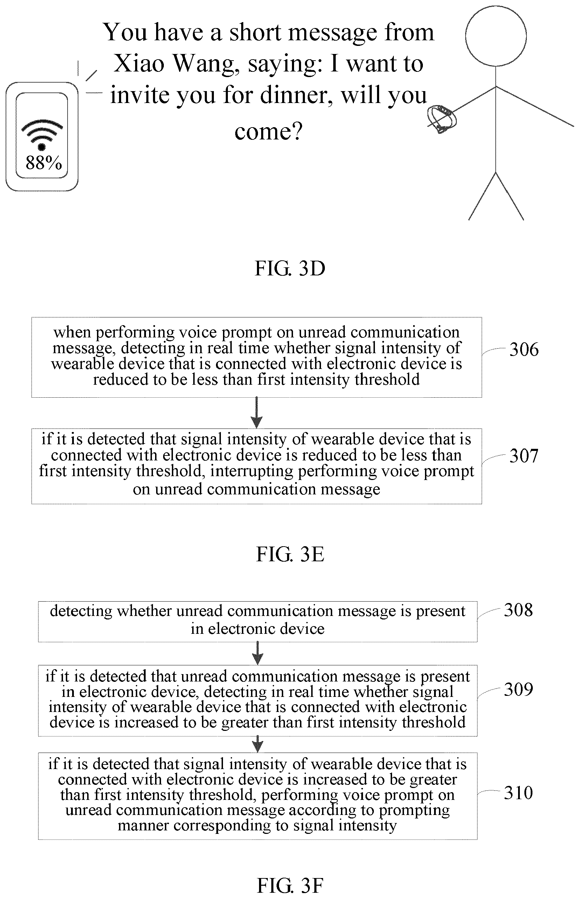

For example, please refer to FIG. 3D, which is a diagram illustrating a voice prompt according to still another exemplary embodiment. As shown in FIG. 3D, the second intensity threshold is 60%. After receiving a short message, the electronic device acquires that the signal intensity of the wearable device that is connected with the electronic device is 88%. The detected signal intensity of the wearable device is greater than the second intensity threshold 60%. In this case, the electronic device may perform voice prompt on the unread communication message in a prompting manner of prompting complete information: "You have a short message from Xiao Wang, saying: I want to invite you for dinner, will you come?". This voice prompt includes all contents of the unread communication message, so that the user can acquire all contents of the unread communication message without any operation, thus improving the efficiency for acquiring the unread communication message when it's inconvenient for the user to view the screen of the electronic device.

It should be noted that, the prompting manner corresponding to the signal intensity of the wearable device acquired by the electronic device is not necessarily as recited in the above steps 303 to 305. The prompting manner corresponding to the signal intensity may be set by the user based on his/her own needs. For example, the prompting manners corresponding to respective signal intensities may all be set as performing voice prompt on the unread communication message in a prompting manner of prompting complete information, may all be set as performing voice prompt on the unread communication message in a prompting manner of prompting brief information, may all be set as performing voice prompt on the unread communication message in a prompting manner of shielding privacy information, or may all be set as forbidding performing voice prompt on the unread communication message. Alternatively, the prompting manners corresponding to signal intensities less than the second intensity threshold may be set as performing voice prompt on the unread communication message in a prompting manner of shielding privacy information, and the prompting manners corresponding to signal intensities greater than the second intensity threshold may be set as performing voice prompt on the unread communication message in a prompting manner of prompting complete information. Alternatively, the prompting manners corresponding to signal intensities less than the first intensity threshold may be set as forbidding performing voice prompt on the unread communication message, and the prompting manners corresponding to signal intensities greater than the first intensity threshold may be set as performing voice prompt on the unread communication message in a prompting manner of prompting brief information.

Optionally, as for different types of unread communication messages, different prompting manners may be set to perform voice prompt. For example, as for a short message, the prompting manners corresponding to signal intensities less than the second intensity threshold may be set as performing voice prompt on the unread communication message in a prompting manner of shielding privacy information, and the prompting manners corresponding to signal intensities greater than the second intensity threshold may be set as performing voice prompt on the unread communication message in a prompting manner of prompting complete information; as for a voice communication message, the prompting manners corresponding to signal intensities less than the first intensity threshold may be set as forbidding performing voice prompt on the unread communication message, and the prompting manners corresponding to signal intensities greater than the first intensity threshold may be set as performing voice prompt on the unread communication message in a prompting manner of prompting brief information; as for an instant communication message, the prompting manners corresponding to signal intensities less than the first intensity threshold may be set as performing voice prompt on the unread communication message in a prompting manner of shielding privacy information, and the prompting manners corresponding to signal intensities greater than the first intensity threshold may be set as performing voice prompt on the unread communication message in a prompting manner of prompting brief information.

To sum up, according to the voice prompting method provided by the embodiment of the present disclosure, when an unread communication message is received, a signal intensity of a wearable device that is connected with the electronic device is acquired, and voice prompt is performed on the unread communication message according to a prompting manner corresponding to the signal intensity. Because when voice prompt is performed on the unread communication message, the prompting manner may be defined based on the signal intensity of the wearable device, and the signal intensity of the wearable device usually indicates a distance from the user to the electronic device, thus, when the user is located remote from the electronic device, the voice prompt may be performed in a safer voice prompting manner, thereby solving the problem in the related art that when voice prompt is performed on detailed content of an unread communication message in the same prompting manner, privacy is easily leaked for a user at a remote location, and achieving the effect of enhancing security of user information.

In addition, at least two signals broadcasted from the wearable device that is connected with the electronic device are acquired, an average value of signal intensities of the acquired at least two signals is calculated, and the obtained average value is determined as the signal intensity of the wearable device. Because an average value of a plurality of acquired signal intensities of the wearable device that is connected with the electronic device can be taken as the signal intensity of the wearable device, the problem that the accuracy of the acquired signal intensity is relatively low when acquiring the signal intensity of the wearable device only once is solved, achieving the effect of increasing the accuracy of the acquired signal intensity.

In one possible embodiment, when the electronic device performs no voice prompt on the unread communication message, the user may be in a walking state, and the user does not carry the electronic device with him/herself. That is, the distance from the wearable device worn by the user to the electronic device is changing. In this case, the electronic device needs to detect in real time the signal intensity of the wearable device that is connected with the electronic device. When the signal intensity is excessively low, the voice prompt on the unread communication message is interrupted, so as to prevent the problem that when the user is remote from the electronic device, the electronic device still performs voice prompt and causes the user's information to be leaked. Please refer to the following steps 306 to 307.

Please refer to FIG. 3E, which is a flowchart illustrating a method for interrupting voice prompt according to an exemplary embodiment.

In step 306, when performing voice prompt on the unread communication message, it is detected in real time whether the signal intensity of the wearable device that is connected with the electronic device is reduced to be less than the first intensity threshold.

When performing voice prompt on the unread communication message, the electronic device receives in real time the signal broadcasted from the wearable device that is connected with the electronic device, determines the signal intensity of the wearable device that is connected with the electronic device, and detects whether the signal intensity is reduced to be less than the first intensity threshold.

In step 307, if it is detected that the signal intensity of the wearable device that is connected with the electronic device is reduced to be less than the first intensity threshold, performing voice prompt on the unread communication message is interrupted.

When it is detected that the signal intensity of the wearable device that is connected with the electronic device is reduced to be less than the first intensity threshold, it indicates that the user is remote from the electronic device right now. In this case, the electronic device may interrupt performing voice prompt on the unread communication message, so as to prevent leakage of the user's information.

In the present embodiment, when voice prompt is performed on the unread communication message, if it is detected that the signal intensity of the wearable device that is connected with the electronic device is reduced to be less than the first intensity threshold, performing voice prompt on the unread communication message is interrupted. Because performing voice prompt on the unread communication message can be interrupted when the user is remote from the electronic device, it is capable of solving the problem that when the user is remote from the electronic device, the electronic device continues to perform voice prompt on the unread communication message and causes the user's information to be leaked, achieving the effect of enhancing security of user information.

In one possible aspect, after the electronic device performs voice prompt on the unread communication message, a user may not hear the voice prompt because the user is remote from the electronic device. When the user gets close to the electronic device, the electronic device may re-perform voice prompt on the unread communication message. Please refer to the following steps 308 to 310.

Please refer to FIG. 3F, which is a flowchart illustrating a method for re-performing voice prompt according to an exemplary aspect.

In step 308, it is detected whether an unread communication message is present in the electronic device.

The unread communication message herein may be a short message, a voice communication message, an instant communication message or the like that has not been read or viewed by the user.

The unread communication message may be an unread communication message that has not been viewed by the user after voice prompt is performed by the electronic device, may be an unread communication message that is received when the electronic device is remote from the user, is not voice-prompted, and has not been viewed by the user, or may be an unread communication message on which the voice prompt is interrupted because the user is remote from the electronic device when the electronic device performs voice prompt, and which has not been viewed by the user.

In step 309, if it is detected that an unread communication message is present in the electronic device, it is detected in real time whether the signal intensity of the wearable device that is connected with the electronic device is increased to be greater than the first intensity threshold.

After detecting that an unread communication message is present, the electronic device receives in real time the signal broadcasted from the wearable device that is connected with the electronic device, determines the signal intensity of the wearable device that is connected with the electronic device, and detects whether the signal intensity is increased to be greater than the first intensity threshold.

Optionally, in order to prevent the problem that voice prompt is performed on the same unread communication message for many times and thereby the user is disturbed, the user may control, by setting a predefined prompt time threshold, the times for which the same unread communication message can be voice prompted. After detecting that an unread communication message is present, the electronic device may detect whether the times for which the unread communication message is voice prompted reach the predefined prompt time threshold. If it is detected that the times for which the unread communication message is voice prompted reach the predefined prompt time threshold, re-performing voice prompt on the unread communication message may be stopped. For example, the predefined prompt time threshold may be set as 3. After detecting that the same unread communication message has been voice prompted for 3 times, the electronic device may stop re-performing voice prompt on the unread communication message, so as to avoid disturbing the user by voice prompt for many times. Optionally, the user may set different predefined prompt time thresholds for different types of unread communication messages, so as to satisfy the user's corresponding requirements.

Optionally, when it is detected that the times for which the unread communication message is voice prompted do not reach the predefined prompt time threshold, perform the step to detect in real time whether the signal intensity of the wearable device that is connected with the electronic device is increased to be greater than the first intensity threshold.

In step 310, if it is detected that the signal intensity of the wearable device that is connected with the electronic device is increased to be greater than the first intensity threshold, voice prompt is performed on the unread communication message according to the prompting manner corresponding to the signal intensity.

When it is detected that the signal intensity of the wearable device that is connected with the electronic device is increased to be greater than the first intensity threshold, it indicates that the user is getting close to the electronic device. At this time, because the user hasn't viewed the unread communication message, in order to ensure the user to view it in good time and avoid important messages from being missed, the electronic device may re-perform voice prompt on the unread communication message according to the prompting manner corresponding to the detected signal intensity.

In the present aspect when it is detected that the signal intensity of the wearable device that is connected with the electronic device is increased to be greater than the first intensity threshold, voice prompt is performed on the existing unread communication message. Because voice prompt may be performed on the existing unread communication message when the user gets close to the electronic device, it is capable of solving the problem that if voice prompt is performed on the unread communication message only once, the user may miss the unread communication message when the user is not located around the electronic device, achieving the effect of improving voice prompt effect.

Apparatus embodiments of the present disclosure are described hereinafter, wherein the apparatuses may be used to perform the method embodiments of the present disclosure. Details that are not disclosed in the apparatus embodiments of the present disclosure, reference may be made to the method embodiments of the present disclosure.

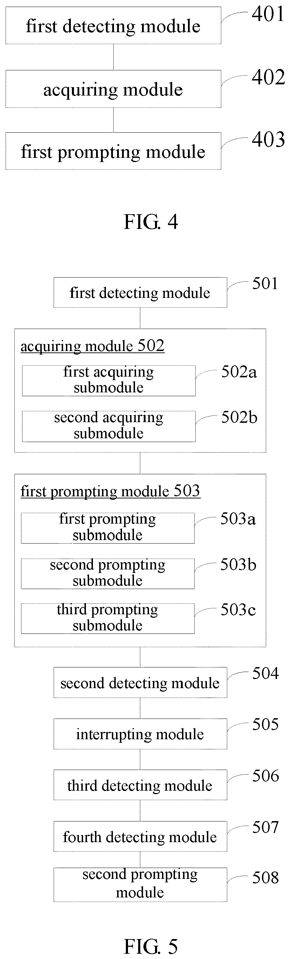

FIG. 4 is a block diagram illustrating a voice prompting apparatus according to an exemplary embodiment. As shown in FIG. 4, the voice prompting apparatus is applied in the electronic device 120 in the implementing environment as shown in FIG. 1. The voice prompting apparatus may include but not limited to: a first detecting module 401, an acquiring module 402 and a first prompting module 403.

The first detecting module 401 is configured to detect whether an unread communication message is received.

The acquiring module 402 is configured to, when the first detecting module 401 detects that an unread communication message is received, acquire a signal intensity of a wearable device that is connected with the electronic device.

The first prompting module 403 is configured to perform voice prompt on the unread communication message according to a prompting manner corresponding to the signal intensity acquired by the acquiring module 402.

To sum up, according to the voice prompting apparatus provided by the embodiment of the present disclosure, when an unread communication message is received, a signal intensity of a wearable device that is connected with the electronic device is acquired, and voice prompt is performed on the unread communication message according to a prompting manner corresponding to the signal intensity. Because when voice prompt is performed on the unread communication message, the prompting manner may be defined based on the signal intensity of the wearable device, and the signal intensity of the wearable device usually indicates a distance from the user to the electronic device, thus, when the user is located remote from the electronic device, the voice prompt may be performed in a safer voice prompting manner, thereby solving the problem in the related art that when voice prompt is performed on detailed content of an unread communication message in the same prompting manner, privacy is easily leaked for a user at a remote location, and achieving the effect of enhancing security of user information.

FIG. 5 is a block diagram illustrating a voice prompting apparatus according to another exemplary embodiment. As shown in FIG. 5, the voice prompting apparatus is applied in the electronic device 120 in the implementing environment as shown in FIG. 1. The voice prompting apparatus may include but not limited to: a first detecting module 501, an acquiring module 502 and a first prompting module 503.

The first detecting module 501 is configured to detect whether an unread communication message is received.

The acquiring module 502 is configured to, when the first detecting module 501 detects that an unread communication message is received, acquire a signal intensity of a wearable device that is connected with the electronic device.

The first prompting module 503 is configured to perform voice prompt on the unread communication message according to a prompting manner corresponding to the signal intensity acquired by the acquiring module 502.

In one possible embodiment, the first prompting module 503 may include a first prompting submodule 503a, a second prompting submodule 503b and a third prompting submodule 503c.

The first prompting submodule 503a is configured to, when the signal intensity is less than a first intensity threshold, perform voice prompt on the unread communication message in a prompting manner of shielding privacy information, or forbid performing voice prompt on the unread communication message, the privacy information at least comprising a sender and content of the unread communication message.

The second prompting submodule 503b is configured to, when the signal intensity is greater than the first intensity threshold and less than a second intensity threshold, perform voice prompt on the unread communication message in a prompting manner of prompting brief information, the brief information at least comprising the sender of the unread communication message.

The third prompting submodule 503c is configured to, when the signal intensity is greater than the second intensity threshold, perform voice prompt on the unread communication message in a prompting manner of prompting complete information.

In one possible embodiment, the voice prompting apparatus may further include a second detecting module 504 and an interrupting module 505.

The second detecting module 504 is configured to, when performing voice prompt on the unread communication message, detect in real time whether the signal intensity of the wearable device that is connected with the electronic device is reduced to be less than the first intensity threshold.

The interrupting module 505 is configured to, when the second detecting module 504 detects that the signal intensity of the wearable device that is connected with the electronic device is reduced to be less than the first intensity threshold, interrupt performing voice prompt on the unread communication message.

In one possible embodiment, the voice prompting apparatus may further include a third detecting module 506, a fourth detecting module 507 and a second prompting module 508.

The third detecting module 506 is configured to detect whether an unread communication message is present in the electronic device.

The fourth detecting module 507 is configured to, when the third detecting module 506 detects that an unread communication message is present in the electronic device, detect in real time whether the signal intensity of the wearable device that is connected with the electronic device is increased to be greater than the first intensity threshold.

The second prompting module 508 is configured to, when the fourth detecting module 507 detects that the signal intensity of the wearable device that is connected with the electronic device is increased to be greater than the first intensity threshold, perform voice prompt on the unread communication message according to the prompting manner corresponding to the signal intensity.

In one possible embodiment, the acquiring module 502 may include a first acquiring submodule 502a or a second acquiring submodule 502b.

The first acquiring submodule 502a is configured to acquire a signal broadcasted from the wearable device that is connected with the electronic device, obtain a signal intensity of the signal, and determine the obtained signal intensity as the signal intensity of the wearable device; or,

The second acquiring submodule 502b is configured to acquire at least two signals broadcasted from the wearable device that is connected with the electronic device, calculate an average value of signal intensities of the acquired at least two signals, and determine the obtained average value as the signal intensity of the wearable device.

To sum up, according to the voice prompting apparatus provided by the embodiment of the present disclosure, when an unread communication message is received, a signal intensity of a wearable device that is connected with the electronic device is acquired, and voice prompt is performed on the unread communication message according to a prompting manner corresponding to the signal intensity. Because when voice prompt is performed on the unread communication message, the prompting manner may be defined based on the signal intensity of the wearable device, and the signal intensity of the wearable device usually indicates a distance from the user to the electronic device, thus, when the user is located remote from the electronic device, the voice prompt may be performed in a safer voice prompting manner, thereby solving the problem in the related art that when voice prompt is performed on detailed content of an unread communication message in the same prompting manner, privacy is easily leaked for a user at a remote location, and achieving the effect of enhancing security of user information.

In addition, when voice prompt is performed on the unread communication message, if it is detected that the signal intensity of the wearable device that is connected with the electronic device is reduced to be less than the first intensity threshold, performing voice prompt on the unread communication message is interrupted. Because performing voice prompt on the unread communication message can be interrupted when the user is remote from the electronic device, it is capable of solving the problem that when the user is remote from the electronic device, the electronic device continues to perform voice prompt on the unread communication message and causes the user's information to be leaked, achieving the effect of enhancing security of user information.

In addition, at least two signals broadcasted from the wearable device that is connected with the electronic device are acquired, an average value of signal intensities of the acquired at least two signals is calculated, and the obtained average value is determined as the signal intensity of the wearable device. Because an average value of a plurality of acquired signal intensities of the wearable device that is connected with the electronic device can be taken as the signal intensity of the wearable device, the problem that the accuracy of the acquired signal intensity is relatively low when acquiring the signal intensity of the wearable device only once is solved, achieving the effect of increasing the accuracy of the acquired signal intensity.

In addition, when it is detected that the signal intensity of the wearable device that is connected with the electronic device is increased to be greater than the first intensity threshold, voice prompt is performed on the existing unread communication message. Because voice prompt may be performed on the existing unread communication message when the user gets close to the electronic device, it is capable of solving the problem that if voice prompt is performed on the unread communication message only once, the user may miss the unread communication message when the user is not located around the electronic device, achieving the effect of improving voice prompt effect.

With respect to the apparatuses in the above embodiments, the specific implementations of operations executed by various modules thereof have been described in detail in the embodiments illustrating the methods, which are not described herein any further.

An exemplary embodiment of the present disclosure provides a voice prompting apparatus which is applied in an electronic device, being capable of implementing the voice prompting methods provided by the present disclosure. The voice prompting apparatus includes: a processor, and a memory for storing instructions executable by the processor.

The processor is configured to:
detect whether an unread communication message is received;
if it is detected that an unread communication message is received, acquire a signal intensity of a wearable device that is connected with the electronic device; and
perform voice prompt on the unread communication message according to a prompting manner corresponding to the signal intensity.

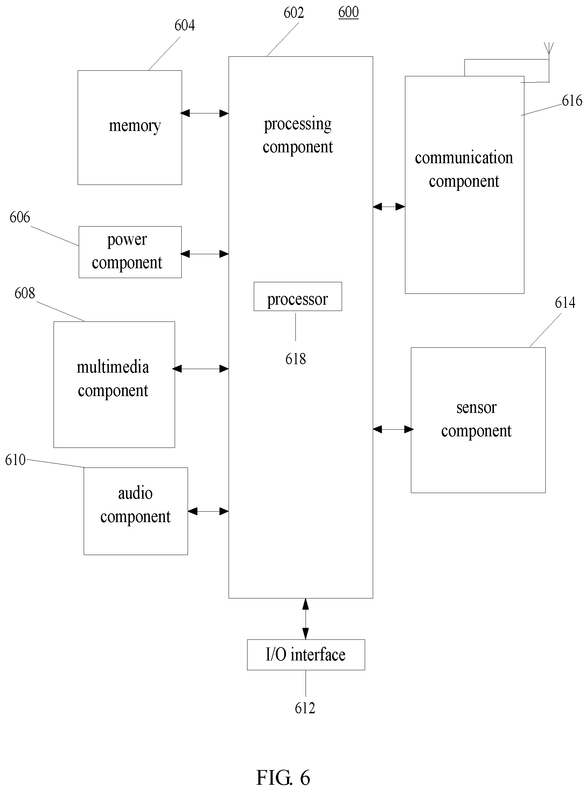

FIG. 6 is a block diagram illustrating an voice prompting apparatus according to an exemplary embodiment. For example, the apparatus 600 may be a mobile phone, a computer, a digital broadcast terminal, a messaging device, a gaming console, a tablet, a personal digital assistant and the like, which has a voice playing function.

Referring to FIG. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 618 to execute instructions to perform all or a part of the steps in the above-described methods. In addition, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operations of the apparatus 600. Examples of such data include instructions for any application or method operated on the apparatus 600, contact data, phonebook data, messages, pictures, videos, and the like. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power supplies, and other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive external multimedia data while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, or a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and a peripheral interface module, such as a keyboard, a click wheel, a button, or the like. The buttons may include, but are not limited to, a home button, a volume button, a starting button, and a locking button.

The sensor component 614 includes one or more sensors to provide status assessments of various aspects of the apparatus 600. For example, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communications, wired or wirelessly, between the apparatus 600 and other devices. The apparatus 600 may access a wireless network based on a communication standard, such as WiFi, 2G, or 3G, or a combination thereof. In one exemplary embodiment, the communication component 616 receives a broadcast signal or broadcast associated notification information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described voice prompting methods.

In exemplary embodiments, there is also provided a non-transitory computer-readable storage medium including instructions, such as included in the memory 604, executable by the processor 618 in the apparatus 600, for performing the above-described voice prompting methods. For example, the non-transitory computer-readable storage medium may be a ROM, a random access memory (RAM), a compact disc read-only memory (CD-ROM), a magnetic tape, a floppy disc, an optical data storage device, or the like.

It will be appreciated that the present disclosure is not limited to the exact construction that has been described above and illustrated in the accompanying drawings, and that various modifications and changes can be made without departing from the scope of the claims.

## Claims

1. A voice prompting method, which is applied in an electronic device, the method comprising:
detecting (201, 301) whether an unread communication message is received;
if it is detected that an unread communication message is received, acquiring (202, 302) a signal intensity of a wireless connection between a wearable device and the electronic device;
wherein the method further comprises:
performing (203) voice prompt on the unread communication message, at the electronic device, according to a prompting manner corresponding to the signal intensity;
wherein performing (203) voice prompt on the unread communication message according to a prompting manner corresponding to the signal intensity comprises:
when the signal intensity is less than a first intensity threshold, performing (303) voice prompt on the unread communication message in a prompting manner of protecting privacy information whereby the sender and content of the unread communication message is not included in the voice prompt, or forbidding performing voice prompt on the unread communication message;
when the signal intensity is greater than the first intensity threshold and less than a second intensity threshold, performing (304) voice prompt on the unread communication message in a prompting manner of prompting brief information, the brief information at least comprising the sender of the unread communication message; and
when the signal intensity is greater than the second intensity threshold, performing (305) voice prompt on the unread communication message in a prompting manner of prompting complete information, the complete information including the sender and content of the unread communication message;
**characterized in that** the method further comprises:
when performing voice prompt on the unread communication message, detecting (306) in real time whether the signal intensity of the wearable device that is connected with the electronic device is reduced to be less than the first intensity threshold; and
if it is detected that the signal intensity of the wearable device that is connected with the electronic device is reduced to be less than the first intensity threshold, interrupting (307) performing voice prompt on the unread communication message.

2. The method according to claim 1, **characterized in that** the method further comprises:
detecting (308) whether an unread communication message is present in the electronic device;
if it is detected that an unread communication message is present in the electronic device, detecting (309) in real time whether the signal intensity of the wearable device that is connected with the electronic device is increased to be greater than the first intensity threshold; and
if it is detected that the signal intensity of the wearable device that is connected with the electronic device is increased to be greater than the first intensity threshold, performing (310) voice prompt on the unread communication message according to the prompting manner corresponding to the signal intensity.

3. The method according to any one of claims 1 or 2, **characterized in that** said acquiring (202, 302) a signal intensity of a wearable device that is connected with the electronic device comprises:
acquiring a signal broadcasted from the wearable device that is connected with the electronic device, obtaining a signal intensity of the signal, and determining the obtained signal intensity as the signal intensity of the wearable device; or,
acquiring at least two signals broadcasted from the wearable device that is connected with the electronic device, calculating an average value of signal intensities of the acquired at least two signals, and determining the obtained average value as the signal intensity of the wearable device.

4. A voice prompting apparatus, which is applied in an electronic device, the apparatus comprising:
a first detecting module (401, 501), configured to detect whether an unread communication message is received;
an acquiring module (402, 502), configured to, when the first detecting module (401, 501) detects that an unread communication message is received, acquire a signal intensity of a wireless connection between a wearable device and the electronic device;
the apparatus further comprising:
a first prompting module (403, 503), configured to perform voice prompt on the unread communication message according to a prompting manner corresponding to the signal intensity acquired by the acquiring module (402, 502);
wherein the first prompting module (503) comprises:
a first prompting submodule (503a), configured to, when the signal intensity is less than a first intensity threshold, perform voice prompt on the unread communication message in a prompting manner of protecting privacy information whereby the sender and content of the unread communication message is not included in the voice prompt, or forbid performing voice prompt on the unread communication message;
a second prompting submodule (503b), configured to, when the signal intensity is greater than the first intensity threshold and less than a second intensity threshold, perform voice prompt on the unread communication message in a prompting manner of prompting brief information, the brief information at least comprising the sender of the unread communication message; and
a third prompting submodule (503c), configured to, when the signal intensity is greater than the second intensity threshold, perform voice prompt on the unread communication message in a prompting manner of prompting complete information, the complete information including the sender and content of the unread communication message;
**characterized in that** the apparatus further comprises:
a second detecting module (504), configured to, when performing voice prompt on the unread communication message, detect in real time whether the signal intensity of the wearable device that is connected with the electronic device is reduced to be less than the first intensity threshold; and
an interrupting module (505), configured to, when the second detecting module (504) detects that the signal intensity of the wearable device that is connected with the electronic device is reduced to be less than the first intensity threshold, interrupt performing voice prompt on the unread communication message.

5. The apparatus according to claim 4, **characterized in that** the apparatus further comprises:
a third detecting module (506), configured to detect whether an unread communication message is present in the electronic device;
a fourth detecting module (507), configured to, when the third detecting module (506) detects that an unread communication message is present in the electronic device, detect in real time whether the signal intensity of the wearable device that is connected with the electronic device is increased to be greater than the first intensity threshold; and
a second prompting module (508), configured to, when the fourth detecting module (507) detects that the signal intensity of the wearable device that is connected with the electronic device is increased to be greater than the first intensity threshold, perform voice prompt on the unread communication message according to the prompting manner corresponding to the signal intensity.

6. The apparatus according to any one of claims 4 or 5, **characterized in that** the acquiring module (502) comprises:
a first acquiring submodule (502a), configured to acquire a signal broadcasted from the wearable device that is connected with the electronic device, obtain a signal intensity of the signal, and determine the obtained signal intensity as the signal intensity of the wearable device; or,
a second acquiring submodule (502b), configured to acquire at least two signals broadcasted from the wearable device that is connected with the electronic device, calculate an average value of signal intensities of the acquired at least two signals, and determine the obtained average value as the signal intensity of the wearable device.

7. A voice prompting apparatus, which is applied in an electronic device, the apparatus comprising:
a processor (618); and
a memory (604) for storing instructions executable by the processor (618);
wherein the processor (618) is configured to perform the method of any of claims 1 to 3.

8. A computer program which, when being executed on a processor of an apparatus, performs a method according to any one of claims 1 to 3.

## Patentansprüche

1. Sprachansageverfahren, das in einer elektronischen Vorrichtung angewendet wird, wobei das Verfahren Folgendes aufweist:
Feststellen (201, 301), ob eine ungelesene Kommunikationsnachricht empfangen wurde;
falls festgestellt wird, dass eine ungelesene Kommunikationsnachricht empfangen wurde, Erfassen (202, 302) einer Signalintensität einer drahtlosen Verbindung zwischen einem tragbaren Gerät und der elektronischen Vorrichtung;
wobei das Verfahren ferner Folgendes aufweist:
an der elektronischen Vorrichtung Durchführen (203) einer Sprachansage an der ungelesenen Kommunikationsnachricht gemäß einer der Signalintensität entsprechenden Ansageweise;
wobei das Durchführen (203) der Sprachansage an der ungelesenen Kommunikationsnachricht gemäß einer der Signalintensität entsprechenden Ansageweise Folgendes aufweist:
wenn die Signalintensität niedriger als eine erste Intensitätsschwelle ist, Durchführen (303) der Sprachansage an der ungelesenen Kommunikationsnachricht in einer Ansageweise zum Schutz vertraulicher Daten, so dass der Sender und Inhalt der ungelesenen Kommunikationsnachricht nicht in der Sprachansage enthalten sind, oder Verbieten der Durchführung der Sprachansage an der ungelesenen Kommunikationsnachricht;
wenn die Signalintensität höher als die erste Intensitätsschwelle und niedriger als eine zweite Intensitätsschwelle ist, Durchführen (304) der Sprachansage an der ungelesenen Kommunikationsnachricht in einer Ansageweise zur Ansage von Kurzinformationen, wobei die Kurzinformationen wenigstens den Sender der ungelesenen Kommunikationsnachricht aufweisen; und
wenn die Signalintensität höher als die zweite Signalschwelle ist, Durchführen (305) der Sprachansage an der ungelesenen Kommunikationsnachricht in einer Ansageweise zur Ansage der gesamten Informationen, wobei die gesamten Informationen den Sender und Inhalt der ungelesenen Kommunikationsnachricht enthalten;
**dadurch gekennzeichnet, dass** das Verfahren ferner Folgendes aufweist:
wenn die Sprachansage an der ungelesenen Kommunikationsnachricht durchgeführt wird, Feststellen (306) in Echtzeit, ob die Signalintensität der tragbaren Vorrichtung, die mit der elektronischen Vorrichtung verbunden ist, reduziert wird, so dass sie niedriger als die erste Intensitätsschwelle ist; und,
falls festgestellt wird, dass die Signalintensität der tragbaren Vorrichtung, die mit der elektronischen Vorrichtung verbunden ist, so reduziert wurde, dass sie niedriger als die erste Intensitätsschwelle ist, Unterbrechen (307) des Durchführens der Sprachansage an der ungelesenen Kommunikationsnachricht.

2. Verfahren nach Anspruch 1, **dadurch gekennzeichnet, dass** das Verfahren ferner Folgendes aufweist:
Feststellen (308), ob eine ungelesene Kommunikationsnachricht in der elektronischen Vorrichtung vorhanden ist;
falls festgestellt wird, dass eine ungelesene Kommunikationsnachricht in der elektronischen Vorrichtung vorhanden ist, Feststellen (309) in Echtzeit, ob die Signalintensität der tragbaren Vorrichtung, die mit der elektronischen Vorrichtung verbunden ist, erhöht wird, so dass sie höher als die erste Intensitätsschwelle ist; und
falls festgestellt wird, dass die Signalintensität der tragbaren Vorrichtung, die mit der elektronischen Vorrichtung verbunden ist, erhöht wird, so dass sie höher als die erste Intensitätsschwelle ist, Durchführen (310) der Sprachansage an der ungelesenen Kommunikationsnachricht gemäß der Ansageweise, die der Signalintensität entspricht.

3. Verfahren nach einem der Ansprüche 1 oder 2, **dadurch gekennzeichnet, dass** das genannte Erfassen (202, 302) einer Signalintensität einer tragbaren Vorrichtung, die mit der elektronischen Vorrichtung verbunden ist, Folgendes aufweist:
Erfassen eines von der tragbaren Vorrichtung, die mit der elektronischen Vorrichtung verbunden ist, ausgesendeten Signals, Ermitteln einer Signalintensität des Signals und Bestimmen der ermittelten Signalintensität als die Signalintensität der tragbaren Vorrichtung; oder
Erfassen von wenigstens zwei von der tragbaren Vorrichtung, die mit der elektronischen Vorrichtung verbunden ist, ausgesendeten Signale, Berechnen eines Durchschnittswerts der Signalintensitäten der erfassten wenigstens zwei Signale und Bestimmen des ermittelten Durchschnittswerts als die Signalintensität der tragbaren Vorrichtung.

4. Sprachansagevorrichtung, die in einer elektronischen Vorrichtung angewendet wird, wobei die Vorrichtung Folgendes aufweist:
ein erstes Feststellungsmodul (401, 501), das konfiguriert ist zum Feststellen, ob eine ungelesene Kommunikationsnachricht empfangen wurde;
ein Erfassungsmodul (402, 502), das konfiguriert ist zum Erfassen einer Signalintensität einer drahtlosen Verbindung zwischen einem tragbaren Gerät und der elektronischen Vorrichtung, wenn das erste Feststellungsmodul (401, 501) feststellt, dass eine ungelesene Kommunikationsnachricht empfangen wurde;
wobei die Vorrichtung ferner Folgendes aufweist:
ein erstes Ansagemodul (403, 503), das konfiguriert ist zum Durchführen einer Sprachansage an der ungelesenen Kommunikationsnachricht gemäß einer der Signalintensität, die durch das Erfassungsmodul (402, 502) erfasst wurde, entsprechenden Ansageweise;
wobei das erste Ansagemodul (503) Folgendes aufweist:
ein erstes Ansage-Submodul (503a), das konfiguriert ist zum Durchführen der Sprachansage an der ungelesenen Kommunikationsnachricht in einer Ansageweise zum Schutz vertraulicher Daten, so dass der Sender und Inhalt der ungelesenen Kommunikationsnachricht nicht in der Sprachansage enthalten sind, oder Verbieten der Durchführung der Sprachansage an der ungelesenen Kommunikationsnachricht, wenn die Signalintensität niedriger als eine erste Intensitätsschwelle ist;
ein zweites Ansage-Submodul (503b), das konfiguriert ist zum Durchführen der Sprachansage an der ungelesenen Kommunikationsnachricht in einer Ansageweise zur Ansage von Kurzinformationen, wobei die Kurzinformationen wenigstens den Sender der ungelesenen Kommunikationsnachricht aufweisen, wenn die Signalintensität höher als die erste Intensitätsschwelle und niedriger als eine zweite Intensitätsschwelle ist; und
ein drittes Ansage-Submodul (503c), das konfiguriert ist zum Durchführen der Sprachansage an der ungelesenen Kommunikationsnachricht in einer Ansageweise zur Ansage der gesamten Informationen, wobei die gesamten Informationen den Sender und Inhalt der ungelesenen Kommunikationsnachricht enthalten, wenn die Signalintensität höher als die zweite Signalschwelle ist;
**dadurch gekennzeichnet, dass** die Vorrichtung ferner Folgendes aufweist:
ein zweites Feststellungsmodul (504), das konfiguriert ist zum Feststellen, wenn die Sprachansage an der ungelesenen Kommunikationsnachricht durchgeführt wird, in Echtzeit, ob die Signalintensität der tragbaren Vorrichtung, die mit der elektronischen Vorrichtung verbunden ist, reduziert wird, so dass sie niedriger als die erste Intensitätsschwelle ist; und,
ein Unterbrechungsmodul (505), das konfiguriert ist zum Unterbrechen des Durchführens der Sprachansage an der ungelesenen Kommunikationsnachricht, wenn das zweite Feststellungsmodul (504) feststellt, dass die Signalintensität der tragbaren Vorrichtung, die mit der elektronischen Vorrichtung verbunden ist, so reduziert wurde, dass sie niedriger als die erste Intensitätsschwelle ist.

5. Vorrichtung nach Anspruch 4, **dadurch gekennzeichnet, dass** die Vorrichtung ferner Folgendes aufweist:
ein drittes Feststellungsmodul (506), das konfiguriert ist zum Feststellen, ob eine ungelesene Kommunikationsnachricht in der elektronischen Vorrichtung vorhanden ist;
ein viertes Feststellungsmodul (507), das konfiguriert ist zum Feststellen, wenn das dritte Feststellungsmodul (506) feststellt, dass eine ungelesene Kommunikationsnachricht in der elektronischen Vorrichtung vorhanden ist, in Echtzeit, ob die Signalintensität der tragbaren Vorrichtung, die mit der elektronischen Vorrichtung verbunden ist, erhöht wird, so dass sie höher als die erste Intensitätsschwelle ist; und
ein zweites Ansagemodul (508), das konfiguriert ist zum Durchführen der Sprachansage an der ungelesenen Kommunikationsnachricht gemäß der Ansageweise, die der Signalintensität entspricht, wenn das vierte Feststellungsmodul (507) feststellt, dass die Signalintensität der tragbaren Vorrichtung, die mit der elektronischen Vorrichtung verbunden ist, erhöht wird, so dass sie höher als die erste Intensitätsschwelle ist.

6. Vorrichtung nach einem der Ansprüche 4 oder 5, **dadurch gekennzeichnet, dass** das genannte Erfassungsmodul (502) Folgendes aufweist:
ein erstes Erfassungs-Submodul (502a), das konfiguriert ist zum Erfassen eines von der tragbaren Vorrichtung, die mit der elektronischen Vorrichtung verbunden ist, ausgesendeten Signals, Ermitteln einer Signalintensität des Signals und Bestimmen der ermittelten Signalintensität als die Signalintensität der tragbaren Vorrichtung; oder
ein zweites Erfassungs-Submodul (502b), das konfiguriert ist zum Erfassen von wenigstens zwei von der tragbaren Vorrichtung, die mit der elektronischen Vorrichtung verbunden ist, ausgesendeten Signale, Berechnen eines Durchschnittswerts der Signalintensitäten der erfassten wenigstens zwei Signale und Bestimmen des ermittelten Durchschnittswerts als die Signalintensität der tragbaren Vorrichtung.

7. Sprachansageeinrichtung, die in einer elektronischen Vorrichtung angewendet wird, wobei die Einrichtung Folgendes aufweist:
einen Prozessor (618) und
einen Speicher (604) zum Speichern von durch den Prozessor (618) ausführbaren Anweisungen;
wobei der Prozessor (618) zum Durchführen des Verfahrens nach einem der Ansprüche 1 bis 3 konfiguriert ist.

8. Computerprogramm, das bei Ausführung in einem Prozessor einer Einrichtung ein Verfahren nach einem der Ansprüche 1 bis 3 durchführt.

## Revendications

1. Procédé d'invite vocale, qui est appliqué dans un dispositif électronique, le procédé comprenant :
détecter (201, 301) si un message de communication non lu est reçu ;
s'il est détecté qu'un message de communication non lu est reçu, acquérir (202, 302) une intensité de signal d'une connexion sans fil entre un dispositif vestimentaire et le dispositif électronique ;
où le procédé comprend en outre :
effectuer (203) une invite vocale sur le message de communication non lu, au dispositif électronique, conformément à une manière d'invite correspondant à l'intensité du signal ;
dans lequel effectuer (203) une invite vocale sur le message de communication non lu conformément à une manière d'invite correspondant à l'intensité du signal comprend :
lorsque l'intensité du signal est moindre qu'un premier seuil d'intensité, effectuer (303) une invite vocale sur le message de communication non lu selon une manière d'invite protégeant des informations confidentielles en vertu de quoi l'émetteur et le contenu du message de communication non lu ne sont pas inclus dans l'invite vocale, ou bien interdire d'effectuer une invite vocale sur le message de communication non lu ;
lorsque l'intensité du signal est supérieure au premier seuil d'intensité et moindre qu'un deuxième seuil d'intensité, effectuer (304) une invite vocale sur le message de communication non lu selon une manière d'invite invitant des informations brèves, les informations brèves comprenant au moins l'émetteur du message de communication non lu ; et
lorsque l'intensité du signal est supérieure au deuxième seuil d'intensité, effectuer (305) une invite vocale sur le message de communication non lu selon une manière d'invite invitant des informations complètes, les informations complètes comprenant l'émetteur et le contenu du message de communication non lu,
**caractérisé en ce que** le procédé comprend en outre :
lorsque effectuant une invite vocale sur le message de communication non lu, détecter (306) en temps réel si l'intensité de signal du dispositif vestimentaire qui est connecté au dispositif électronique est réduite pour être moindre que le premier seuil d'intensité ; et
s'il est détecté que l'intensité de signal du dispositif vestimentaire qui est connecté au dispositif électronique est réduite pour être moindre que le premier seuil d'intensité, interrompre (307) le fait d'effectuer une invite vocale sur le message de communication non lu.

2. Procédé selon la revendication 1, **caractérisé en ce que** le procédé comprend en outre :
détecter (308) si un message de communication non lu est présent dans le dispositif électronique ;
s'il est détecté qu'un message de communication non lu est présent dans le dispositif électronique, détecter (309) en temps réel si l'intensité de signal du dispositif vestimentaire qui est connecté au dispositif électronique est accrue pour être supérieure au premier seuil d'intensité ; et
s'il est détecté que l'intensité de signal du dispositif vestimentaire qui est connecté au dispositif électronique est accrue pour être supérieure au premier seuil d'intensité, effectuer (310) une invite vocale sur le message de communication non lu conformément à la manière d'invite correspondant à l'intensité du signal.

3. Procédé selon l'une quelconque des revendications 1 ou 2, **caractérisé en ce que** ledit fait d'acquérir (202, 302) une intensité de signal d'un dispositif vestimentaire qui est connecté au dispositif électronique comprend :
acquérir un signal diffusé du dispositif vestimentaire qui est connecté au dispositif électronique, obtenant une intensité de signal du signal, et déterminer l'intensité de signal obtenue comme étant l'intensité de signal du dispositif vestimentaire ; ou bien,
acquérir au moins deux signaux diffusés du dispositif vestimentaire qui est connecté au dispositif électronique, calculer une valeur moyenne des intensités de signaux des au moins deux signaux acquis, et déterminer la valeur moyenne obtenue comme étant l'intensité de signal du dispositif vestimentaire.

4. Appareil d'invite vocale, qui est appliqué dans un dispositif électronique, l'appareil comprenant :
un premier module de détection (401, 501), configuré pour détecter si un message de communication non lu est reçu ;
un module d'acquisition (402, 502), configuré pour, lorsque le premier module de détection (401, 501) détecte qu'un message de communication non lu est reçu, acquérir une intensité de signal d'une connexion sans fil entre un dispositif vestimentaire et le dispositif électronique ;
l'appareil comprenant en outre :
un premier module d'invite (403, 503), configuré pour effectuer une invite vocale sur le message de communication non lu conformément à une manière d'invite correspondant à l'intensité de signal acquise par le module d'acquisition (402, 502) ;
dans lequel le premier module d'invite (503) comprend :
un premier sous-module d'invite (503a), configuré pour, lorsque l'intensité du signal est moindre qu'un premier seuil d'intensité, effectuer une invite vocale sur le message de communication non lu selon une manière d'invite protégeant des informations confidentielles en vertu de quoi l'émetteur et le contenu du message de communication non lu ne sont pas inclus dans l'invite vocale, ou bien interdire d'effectuer une invite vocale sur le message de communication non lu ;
un deuxième sous-module d'invite (503b), configuré pour, lorsque l'intensité du signal est supérieure au premier seuil d'intensité et moindre qu'un deuxième seuil d'intensité, effectuer une invite vocale sur le message de communication non lu selon une manière invitant des informations brèves, les informations brèves comprenant au moins l'émetteur du message de communication non lu ; et
un troisième sous-module d'invite (503c), configuré pour, lorsque l'intensité du signal est supérieure au deuxième seuil d'intensité, effectuer une invite vocale sur le message de communication non lu selon une manière invitant des informations complètes, les informations complètes comprenant l'émetteur et le contenu du message de communication non lu ;
**caractérisé en ce que** l'appareil comprend en outre :
un deuxième module de détection (504), configuré pour, lorsque effectuant une invite vocale sur le message de communication non lu, détecter en temps réel si l'intensité de signal du dispositif vestimentaire qui est connecté au dispositif électronique est réduite pour être moindre que le premier seuil d'intensité ; et
un module d'interruption (505), configuré pour, lorsque le deuxième module de détection (504) détecte que l'intensité de signal du dispositif vestimentaire qui est connecté au dispositif électronique est réduite pour être moindre que le premier seuil d'intensité, interrompre le fait d'effectuer une invite vocale sur le message de communication non lu.

5. Appareil selon la revendication 4, **caractérisé en ce que** l'appareil comprend en outre :
un troisième module de détection (506), configuré pour détecter si un message de communication non lu est présent dans le dispositif électronique ;
un quatrième module de détection (507), configuré pour, lorsque le troisième module (506) de détection détecte qu'un message de communication non lu est présent dans le dispositif électronique, détecte en temps réel si l'intensité de signal du dispositif vestimentaire qui est connecté au dispositif électronique est accrue pour être supérieure au premier seuil d'intensité ; et
un deuxième module d'invite (508), configuré pour, lorsque le quatrième module de détection (507) détecte que l'intensité de signal du dispositif vestimentaire qui est connecté au dispositif électronique est accrue pour être supérieure au premier seuil d'intensité, effectuer une invite vocale sur le message de communication non lu conformément à la manière d'invite correspondant à l'intensité du signal.

6. Appareil selon l'une quelconque des revendications 4 ou 5, **caractérisé en ce que** le module d'acquisition (502) comprend :
un premier sous-module d'acquisition (502a), configuré pour acquérir un signal diffusé du dispositif vestimentaire qui est connecté au dispositif électronique, obtenir une intensité de signal du signal, et déterminer l'intensité de signal obtenue comme étant l'intensité de signal du dispositif vestimentaire ; ou bien,
un deuxième sous-module d'acquisition (502b), configuré pour acquérir au moins deux signaux diffusés du dispositif vestimentaire qui est connecté au dispositif électronique, calculer une valeur moyenne des intensités de signaux des au moins deux signaux acquis, et déterminer la valeur moyenne obtenue comme étant l'intensité de signal du dispositif vestimentaire.

7. Appareil d'invite vocale, qui est appliqué dans un dispositif électronique, l'appareil comprenant :
un processeur (618) ; et
une mémoire (604) pour stocker des instructions exécutables par le processeur (618) ;
dans lequel le processeur (618) est configuré pour effectuer le procédé selon l'une quelconque des revendications 1 à 3.

8. Programme informatique qui, lorsque étant exécuté sur un processeur d'un appareil, effectue un procédé selon l'une quelconque des revendications 1 à 3.
